(19) Europäisches Patentamt
European Patent Office
Office européen des brevets

(11) Publication number: 0 159 291 B1

(12) # EUROPEAN PATENT SPECIFICATION

(45) Date of publication of patent specification: 20.04.88

(51) Int. Cl.$^4$: C 09 D 11/00

(21) Application number: 85810129.8

(22) Date of filing: 25.03.85

(54) **Ink composition for the ink-jet printing process.**

(30) Priority: 29.03.84 GB 8408054

(43) Date of publication of application:
23.10.85 Bulletin 85/43

(45) Publication of the grant of the patent:
20.04.88 Bulletin 88/16

(84) Designated Contracting States:
BE CH DE FR GB IT LI NL

(56) References cited:
DE-A-1 901 422
DE-A-2 012 253
FR-A-1 292 672
FR-A-2 208 791
US-A-4 425 162

PATENTS ABSTRACTS OF JAPAN, vol. 6, no. 68 (C-100)946r, 30th April 1982; & JP - A - 57 5769 (FUJI SHASHIN FILM K.K.) 12-01-1982

(73) Proprietor: CIBA-GEIGY AG
Klybeckstrasse 141
CH-4002 Basel (CH)

(72) Inventor: Gregory, David Preston
1 Osprey Drive
Wilmslow Cheshire SKK 3BB (GB)
Inventor: Postle, Stephen Roderick, Dr.
1, Hereford Drive
Handforth Wilmslow Cheshire SK9 3BB (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 159 291 B1

**Description**

The present invention relates to ink compositions for ink jet printing processes.

Recently, various systems for jet printer have been developed because the jet printing system is a non-impact system having an excellent silent property at high speed without any adverse effect caused by a configuration of a printed surface.

For example, the ink jet process is divided into many ink misting type processes such as an Ink On Demand type process which forms only desired ink droplets from a nozzle by a sudden volumetric change in an ink tank by a piezoelectric element resulting strain by electric pulse signal; an electrostatic attraction type process forming ink droplets from a nozzle under a slight pressure applied to the ink and an electrostatic attractive force; and an ink droplet type process by applying ultrasonic wave to an ink fed under pressure.

Ink jet printers are described in detail for example in Siemens-Zeitschrift 49 (1975), Heft 1, 34—40, Siemens-Zeitschrift 51 (1977), Heft 4, 219—221, and Feinwerktechnik 75 (1971), 365—368.

Aqueous inks which are suitable in ink jet printing processes usually contain a dye, a hydrophilic organic solvent, water and optionally further additives. It is difficult, however, to find a suitable combination of coloured inks. Most ink jet printers use subtractive colour inks to provide the full range of printing colours. Thus, a yellow, a magenta and a cyan ink are used to provide blue, red and green colours where the ink droplets overlap to form the colour image, and when the yellow, magenta and cyan inks all overlap a dark black should be formed.

JP—A—57 5769 (see Patent Abstracts of Japan, Vol. 6, N° 68 (C—100) (1946) 30.04.82 refers to an ink composition which contains a water-soluble magenta dye of the formula

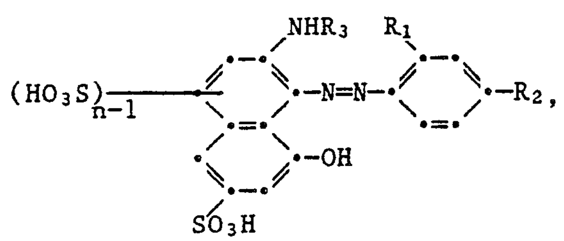

wherein $R_1$ is cyano, alkylsulfonyl or trifluoromethyl, $R_2$ is (acyl)amino, substituted ureido or alkoxy, $R_3$ is hydrogen or alkyl and n is 1 or 2.

FR—A—2 208 791 describes an ink composition which contains a yellow azo dye of the formula

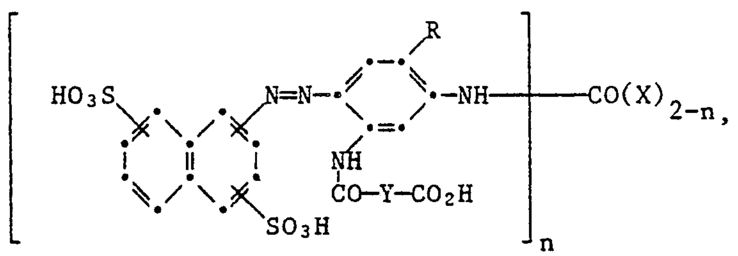

wherein R is hydrogen, alkyl or alkoxy, X is alkyl or alkylamino and Y is a saturated aliphatic group or a unsaturated divalent group optionally interrupted by an oxygen atom, or a magenta dye of the formula

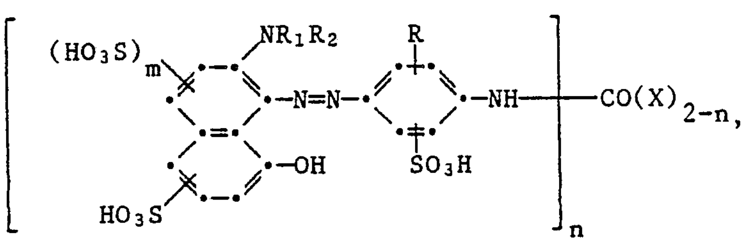

wherein $R_1$ and $R_2$ are hydrogen or alkyl, X is alkyl or alkylamino, m is 0 or 1, n is 1 or 2 and R is hydrogen, alkyl or alkoxy, or a cyan dye, which is a sulpho substituted phthalocyanine dye.

US—A—4 425 162 refers to an ink composition which contains as the yellow dye a compound of the formula

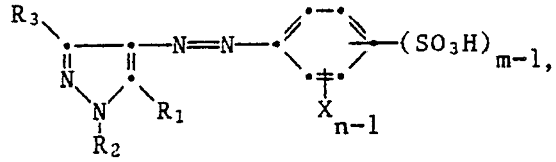

wherein $R_1$ to $R_3$ are substituents, X is chlorine and n and m are 1, 2 or 3, as the magenta dye a compound of the formula

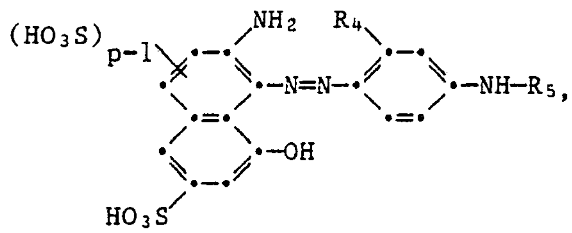

wherein $R_4$ is a substituent and $R_5$ is an acyl group and p is 1 or 2, and as the cyanine dye a copper complex of a phthalocyanine dye.

It has now been found, that particular yellow, magenta and cyan azo dyes or a combination thereof lead to brilliant non-fading colour images of correct hue when used in ink jet processes.

Therefore it is one object of the present invention to provide an ink composition for the ink-jet printing process, wherein the ink composition comprises an aqueous solution of a yellow dye of the general formula

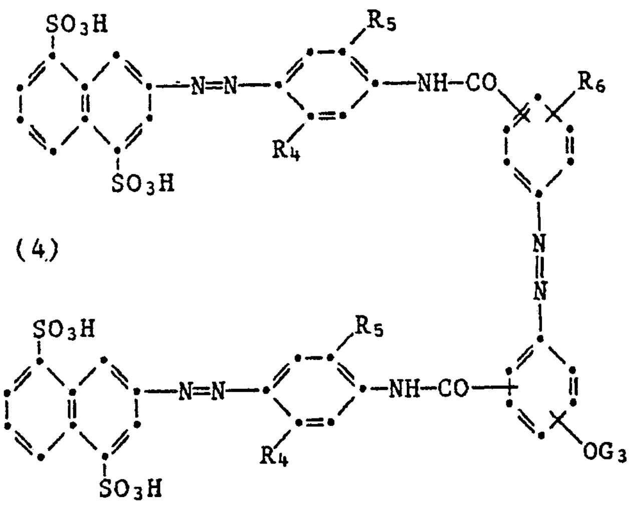

(4)

wherein $R_4$ is chlorine or methyl, methoxy or acetylamino, $R_5$ is hydrogen or methyl, methoxy, ethoxy or 2-hydroxyethoxy, $R_6$ is hydrogen or methoxy and $G_3$ is methyl, the residues of formulae

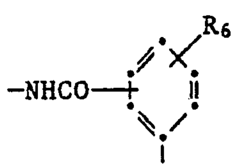

and

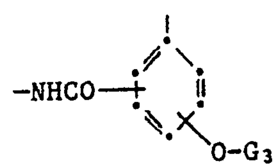

being different from one another and the —NHCO— groups in each case being bound by their —CO— residue in the 3- or 4-position and the $G_3$—O— residue being bound to the benzene residue in the 2- or 4-

position to the azo bridge, an aqueous solution of a magenta azo dye of the formula

(10)

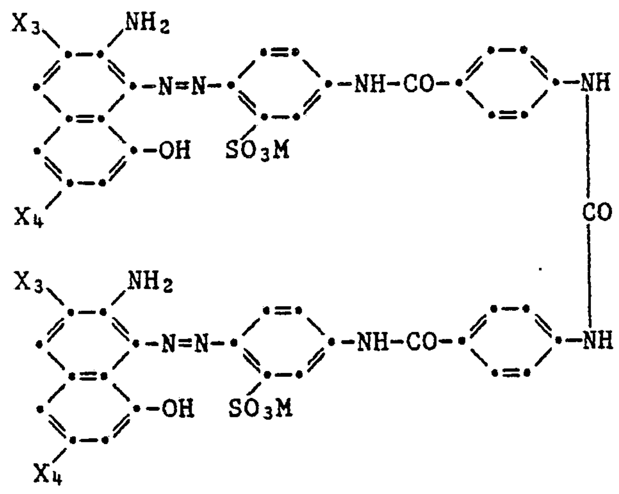

wherein $X_3$ represents a sulphonic acid group or a hydrogen atom, $X_4$ represents a sulphonic acid group or a sulphonic acid amide group and M is hydrogen or an alkali metal, or an aqueous solution of a cyan dye of the formula

(13)

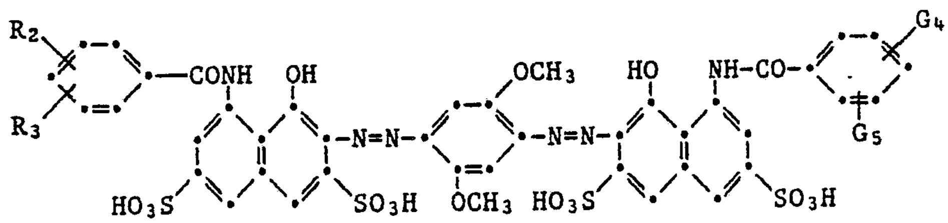

wherein $R_2$ is halogen, nitro, cyano, trifluoromethyl, lower alkyl or alkoxy or a radical of the formula $-NHCOX_3$, $-NHSO_2Y_3$, $-SO_2Z_3$ or $-COW_3$, in which $X_3$ is HOOC-alkyl, HOOC-alkenyl, HOOC-phenyl or furyl, thienyl or pyridyl, $Y_3$ is lower alkyl or a phenyl or alkylphenyl, $Z_3$ is hydroxyl, lower alkyl, phenyl or substituted or unsubstituted amino and $W_3$ is lower alkyl or alkoxy, or hydroxyl, phenyl or substituted amino, $R_3$ is hydrogen or chlorine or nitro, $R_2$ and $R_3$ being in the 3-, 4- or 5-positions to the —CO-group, $G_4$ is hydrogen or chlorine and $G_5$ is hydrogen or chlorine or an $H_2NSO_2$-group, or a combination of the aqueous solutions of at least two dyes of formulae (4), (10) and (13).

A further object of the present invention is a process for the production of a coloured or black-and-white image by ink-jet printing, in the form of dot patterns with ink dots of a plurality of colours on a recording substrate, which comprises using a combination of the above aqueous dye solutions as ink compositions.

Another object of the present invention are the coloured and black-and-white images obtained by the said process.

Still another object of the present invention is an ink-jet colour printing apparatus (printer) which comprises image information input means for receiving image information of an original picture element in the form of digital signals, further memory means for memorizing said signals and image processing means, and a group of ink-jet heads for ejecting yellow ink drops, a group of ink-jet heads for ejecting magenta ink drops, and a group of ink-jet heads for ejecting cyan ink drops. The ink drops are obtained from the aqueous solution of the dyes of formulae (4), (10) and (13) as mentioned hereinbefore.

Preferred azo dyes of the formula (4) are those of the formula

(5)

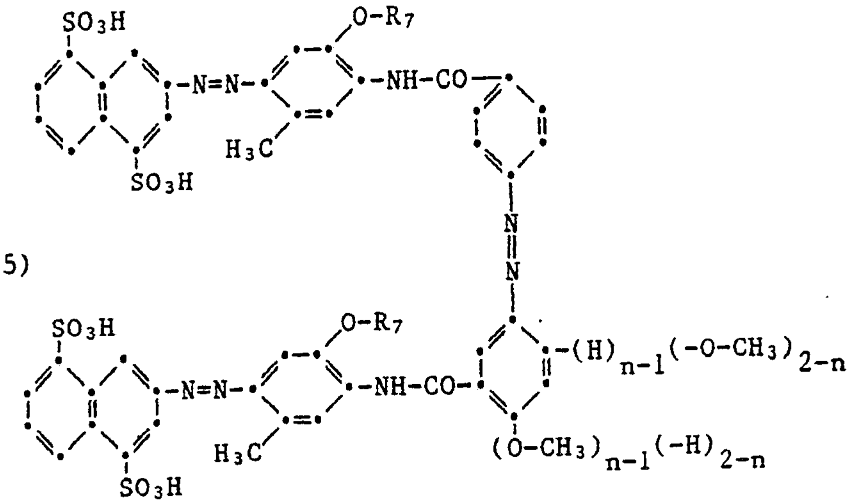

wherein $R_7$ is methyl or 2-hydroxyethyl and n is 1 or 2.

An example of an especially useful yellow azo dye of the formula (5) is the dye of the formula

(6)

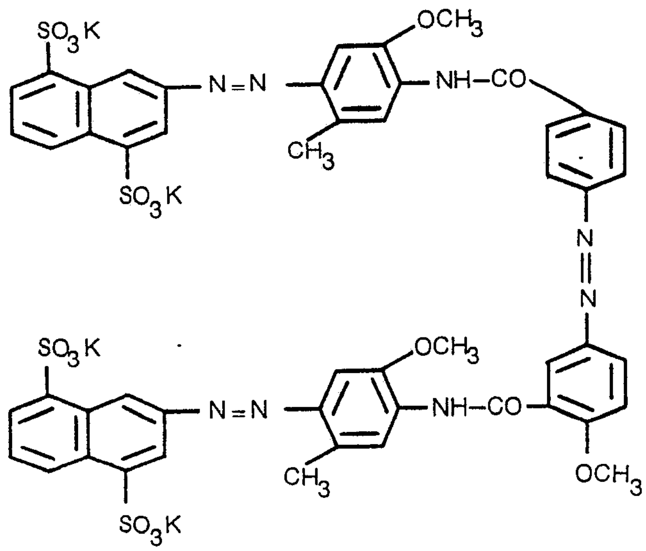

A particularly useful magenta azo dye of the formula (10) is the dye of the formula

(11)

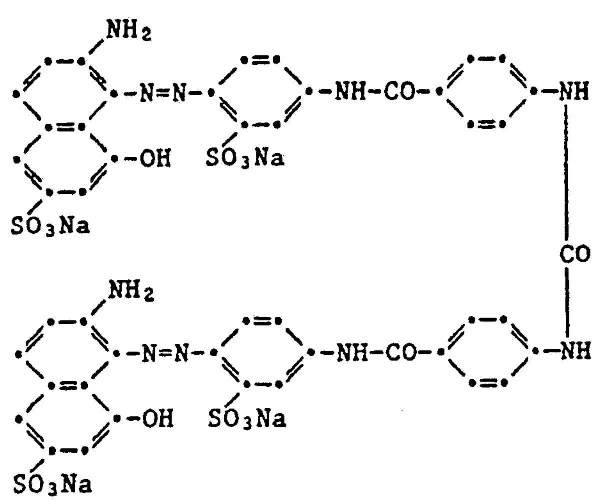

Preferred cyan azo dyes of the formula (13) are those of the formula

(14) 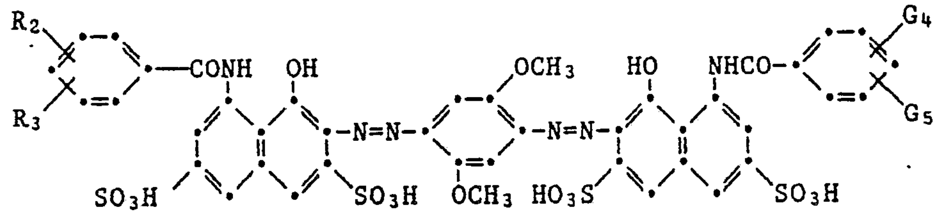

wherein $G_4$ and $G_5$ have the meanings assigned to them above, and $R_2$ is nitro, cyan or $CH_3SO_2$— and $R_3$ is hydrogen or chlorine.

An example of an especially useful cyan dye of the formula (14) is the dye of the formula

(15) 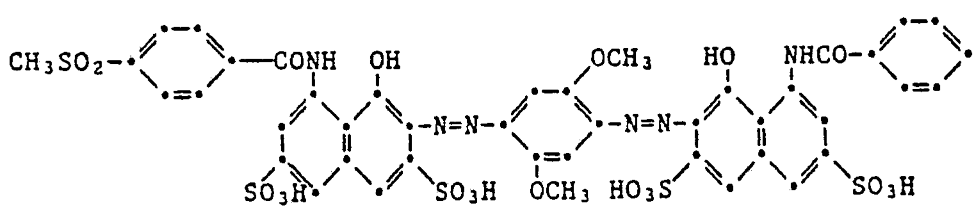

The azo dyes used according to the present invention and their preparation are described in detail in GB 914.876, GB 1.243.748 and GB 1.271.182.

As hydrophilic organic solvents, which can be incorporated into the aqueous inks, there can be mentioned for example humectants such alkylene glycols or alkylene glycol alkyl ethers as described in US 3.705.043 and US 3.846.141, also formamide, dimethylformamide and derivatives thereof as well as N-hydroxyalkyl-2-pyrrolidone compounds as described in JP 6881/1978 and JP 16243/1979. These solvents minimize the undesired drying properties of the inks at the nozzles of the jet printer.

It is advantageous to incorporate into the inks in addition to said humectants solublizing agents such as pyrrolidone derivatives described in US 3.846.141 to obtain a high colour saturation and to prevent aggregation of the dye molecules and a change in colour intensity in the course of time.

The ink compositions according to the present invention optionally contain further additives such as anti-mold agents, which prevent the clogging of the nozzles of the jet printer device with aggregation products resulting from the growth of mold and bacteria. Such antimold agents are for example phenol and phenol derivatives and further examples are described in US 3.705.043.

In order to minimize oxidation reactions in the aqueous ink compositions anti-oxidants such as sodium sulphite can be added.

Aqueous alkalimetalhydroxide solutions or solutions of other inorganic or organic bases (ammonia, alkyl- or alkenolamines) can be added to yield a pH-value of 7 to 10.5, which has been found to be the best pH-range for the inks.

Further additives for the aqueous inks for ink jet printing processes are represented by inorganic compounds, i.e. electrolytes, such as sodium chloride or sulphate, chelating agents such as EDTA, which mainly act as anti-foaming agents, organic solvents such as alkanol-amines and also water-soluble polymers such as cellulose derivatives and polyvinyl alcohol.

Another group of additives which may be incorporated into the aqueous inks are surfactants which improve the wetting ability of the inks and which also serve to achieve and maintain the most desirable shear characteristics of the aqueous composition for drop formation and jet stability.

The inks used in the ink jet printer of the present invention are aqueous solutions of the dyes which often contain other additives such as thickeners or thixotropic agents to improve the viscosity of the solution to enable correct drop formation in the ink-jet to be achieved. Surfactants can also be added to achieve and maintain the most desirable shear characteristics of the liquid for drop formation and jet stability. Alkalis or bases are often added to yield a pH of 7—10.5 which has been found to be the best pH range for the inks.

Anti-foaming agents are sometimes useful as are chelating agents if the water used with which to formulate the solution is hard water. Fungicides and bacterocides and such as phenol may be added and also anti-oxidants such as sodium sulphite.

Depending on the material on which it is required to form an ink-jet image using the printer of the present invention it is often desirable to include in the inks a humectant for example ethylene glycol or an alkyl phosphate or phosphite. Water-soluble polymers, lacquers and resins are often added in the solution to improve the drying properties of the inks. Organic solvents are sometimes included in the formulation to minimise the drying time of the ink and to minimise faults such as feathering and 'strike through'. For example ethanol and methyl ethyl ketone.

For some applications is to desirable to include an electrolyte in the inks. For example sodium sulphate.

Viscosity of the ink solutions can be adjusted if required by the addition of thickening agents such as methyl cellulose or carboxymethyl cellulose but their use is not always necessary.

Preferably the ink compositions according to the present invention contains 1 to 3% by weight solids.

The ink compositions used satisfy the requirements made on an ink compositions for ink jet printing processes. Due to a suitable viscosity and surface tension of the inks used, uniform droplets are formed when jetted through the fine nozzle of the printer device. Their good drying properties and a sufficient water resistance provide clear and sharp symbols. It should further be mentioned, that the inks used also possess a good adherence to the surface of the substrate to be printed. The azo dyes, which are used, exhibit a good solubility in water without increasing the viscosity of the solution and show no tendency to crystallization of sedimentation which could lead to the blocking of the nozzles of the printer and the reduction of the desired high dye density of the printed symbols.

The ink compositions used in the present invention can be used in all types of ink jet printing devices. Further, various types of papers may be used to be printed with the ink compositions. In general all those papers are useful in the inventive process which limit the spreading and feathering of the droplets and the penetration depth of the ink composition. Such papers are described for example in DE—A—3,024,205 and GB—A—2,050,866. The ink compositions, however, are also useful for providing symbols on metallic, plastic or textile surfaces.

The ink compositions used exhibit a good machine compatibility. They do not contaminate the machine with particles, are not corrosive and have a long shelf life.

The following examples will serve to illustrate the invention but is not limiting. Parts and percentages are by weight.

## Example

A 2% aqueous solution of the yellow dye of formula (6), of the magenta dye of formula (11) and of the cyan dye of formula (15) were all prepared.

A very small amount of sodium sulphate was added to each solution to provide a minimum aqueous conductance of 1000 μ S cm.

The pH of each solution was between 7.1 to 8.1. The surface tension of each solution was between $6.4 \cdot 10^{-2}$ and $6.8 \cdot 10^{-2}$ N/m (Newton/m). The viscosity of the solution was between $0.8—3.2 \cdot 10^{-3}$ mPa.s.

In the case of each of these aqueous solutions no additives were required to bring the pH, the viscosity or the surface tension within the required range.

An ink jet printer was used which comprises a group of jets for each aqueous ink solutions. The jets used were of the continuous type with a pressurised delivery with both 2 μm and 10 μm fitters employing a nozzle size of 35 μm and printing 8 drops/mm. There were 10 drops per phase and the drops usage factor was 10%. There were 100 lines between phasings. Phase voltage was set at 10V and gutter voltage at 0V. Print voltage was varied between 100V and 120V and the modulation voltage between 16V and 111V.

The inks were printed on to two papers, one 75 g plain and the other glossy card. The spot sizes obtained when viewed by microscope were of the order of 150 μm and were of good circularity.

The printing densities and reflectance of the ink spots obtained was as follows:

| Dye | Plain Paper<br>Max Reflectance (nm) | <br>Printed Density ($\lambda_{max}$) | Glossy Paper<br>Printed Density ($\lambda_{max}$) |
|---|---|---|---|
| 15 | 618 590, 560<br>(sh) (sh) | 0.77 | 0.74 |
| 11 | 570, 520<br>(sh) | 0.78 | 0.65 |
| 6 | 430, 415<br>(sh) | 0.95 | 0.80 |
| | (sh = shoulder) | | |

(Optimal density about 1.0)

When the aqueous solutions of dyes (15) and (11) were overprinted good blue colour ink dots were obtained.

When the aqueous solutions of dyes (11) and (6) were overprinted good red colour ink dots were obtained.

When the aqueous solutions of dyes (15) and (6) were overprinted good green colour ink dots were obtained.

When the aqueous solutions of the dyes (15, (11) and 6 were overprinted good neutral black ink dots were obtained.

## Claims

1. An ink composition for the ink-jet printing process, wherein the ink composition comprises an aqueous solution of a yellow azo dye of the formula

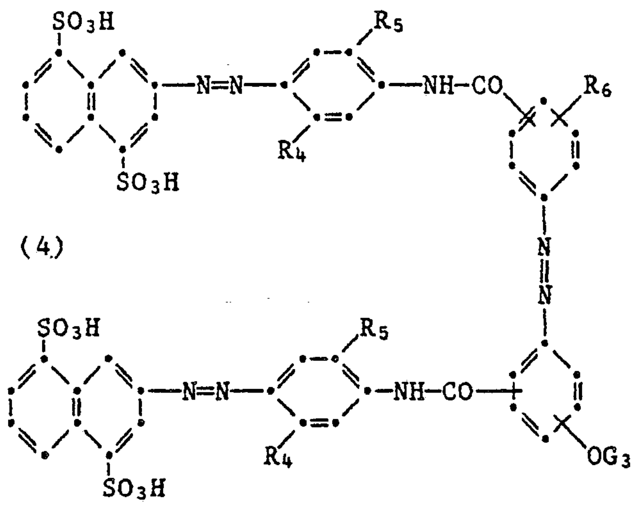

(4)

wherein $R_4$ is chlorine or methyl, methoxy or acetylamino, $R_5$ is hydrogen or methyl, methoxy, ethoxy or 2-hydroxyethoxy, $R_6$ is hydrogen or methoxy and $G_3$ is methyl, the residues of formulae

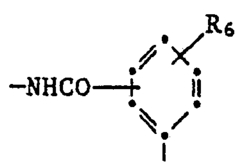

and

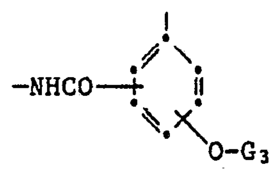

being different from one another and the —NHCO— groups in each case being bound by their —CO— residue in the 3- or 4-position and the $G_3$—O— residue being bound to the benzene residue in the 2- or 4-position to the azo bridge, an aqueous solution of a magenta azo dye of the formula

(10)

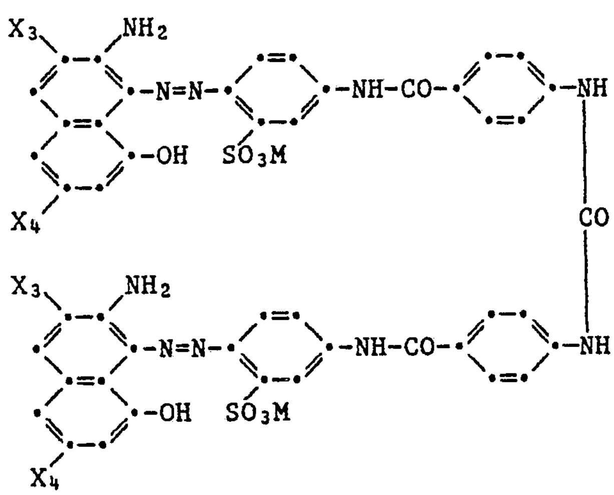

wherein $X_3$ represents a sulphonic acid group or a hydrogen atom, $X_4$ represents a sulphonic acid group or a sulphonic acid amide group and M is hydrogen or an alkali metal, or an aqueous solution of a cyan dye of the formula

(13) 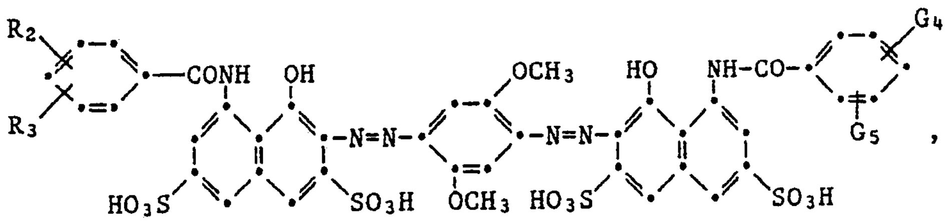

wherein $R_2$ is halogen, nitro, cyano, trifluoromethyl, lower alkyl or alkoxy or a radical of the formula $—NHCOX_3$, $—NHSO_2Y_3$, $—SO_2Z_3$ or $—COW_3$, in which $X_3$ is HOOC-alkyl, HOOC-alkenyl, HOOC-phenyl or furyl, thienyl or pyridyl, $Y_3$ is lower alkyl or a phenyl or alkylphenyl, $Z_3$ is hydroxyl, lower alkyl, phenyl or substituted or unsubstituted amino and $W_3$ is lower alkyl or alkoxy, or hydroxyl, phenyl or substituted amino, $R_3$ is hydrogen or chlorine or nitro, $R_2$ and $R_3$ being in the 3-, 4- or 5-positions to the —CO-group, $G_4$ is hydrogen or chlorine and $G_5$ is hydrogen or chlorine or an $H_2NSO_2$-group, or a combination of the aqueous solutions of at least two dyes of formulae (4), (10) and (13).

2. A composition according to claim 1, wherein the yellow azo dyes are of the formula

(5) 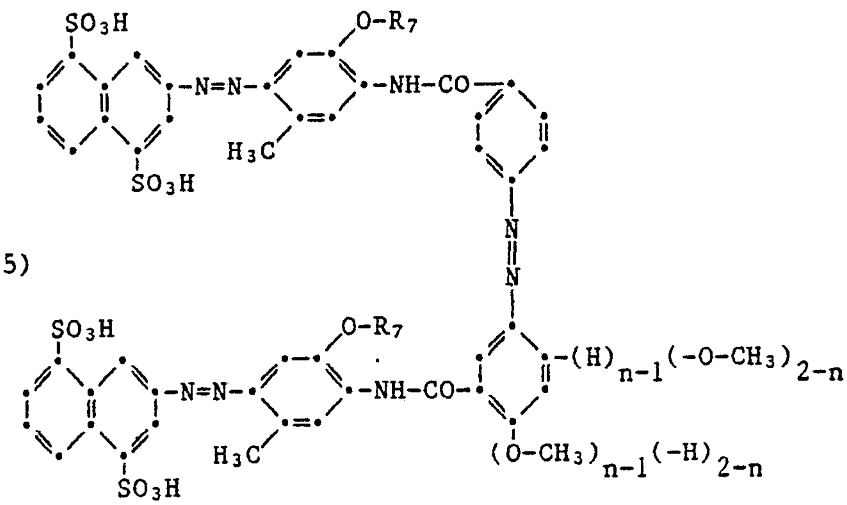

wherein $R_7$ is methyl or 2-hydroxyethyl group and n is 1 or 2.

3. A composition according to claim 1, wherein the cyan azo dyes are of the formula

(14) 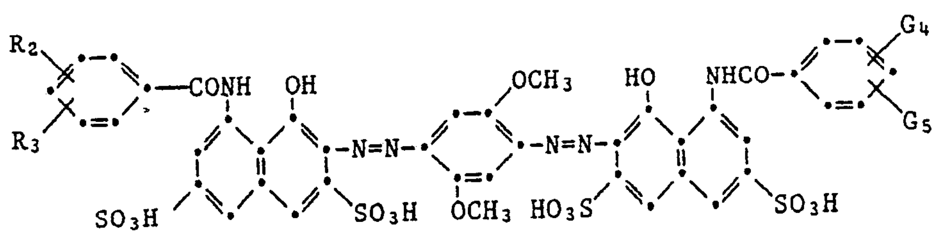

wherein $G_4$ and $G_5$ have the meanings assigned to them in claim 1, and $R_2$ is nitro, cyan or $CH_3SO_2—$ and $R_3$ is hydrogen or chlorine.

4. A process for the production of coloured and black-and-white images by the ink jet printing process in the form of dot patterns with ink dots of a plurality of colours on a recording substrate, which comprises using a combination of the aqueous dye solutions as ink compositions according to any one of claims 1 to 3.

5. The images obtainable by the process according to claim 4.

6. An ink-jet colour printer which comprises image information input means for receiving image information of an original picture element in the form of digital signals, further memory means for memorizing said signals and image processing means, and a group of ink-jet heads for ejecting yellow ink drops, a group of ink-jet heads for ejecting magenta ink drops, and a group of ink-jet heads for ejecting cyan ink drops, wherein the ink comprises the ink compositions according to any one of claims 1 to 3.

**Patentansprüche**

1. Tintenzusammensetzung für das Tintenstrahldruckverfahren, dadurch gekennzeichnet, dass die Tintenzusammensetzung eine wässrige Lösung eines gelben Azofarbstoffs der Formel

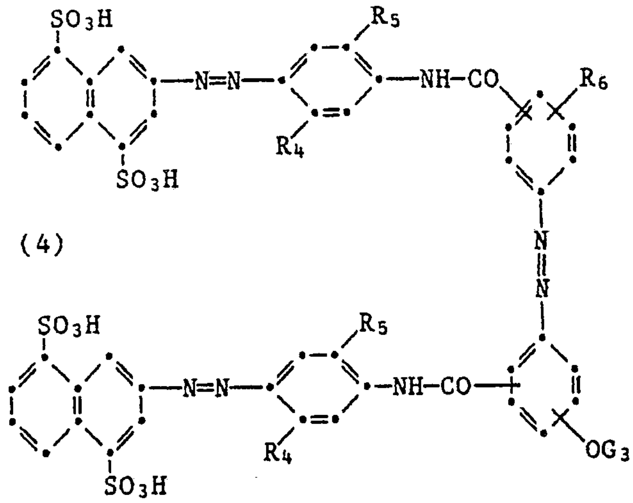

(4)

worin $R_4$ Chlor oder Methyl, Methoxy oder Acetylamino, $R_5$ Wasserstoff oder Methyl, Methoxy, Aethoxy oder 2-Hydroxyäthoxy, $R_6$ Wasserstoff oder Methoxy und $G_3$ Methyl ist, wobei die Reste der Formeln

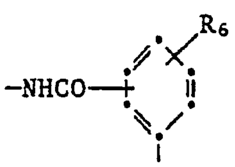

und

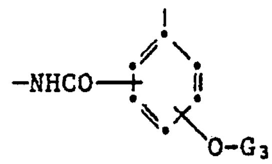

voneinander verschieden sind und die —NHCO-Gruppen in Bezug auf die Azobrücke in jedem Fall über ihre —CO-Gruppe mit der 3- oder 4-Stellung des Phenylrestes verknüpft sind, und der $G_3$—O-Rest in Bezug auf die Azobrücke in der 2- oder 4-Stellung an den Phenylrest gebunden ist, eine wässrige Lösung eines Magentaazofarbstoffs der Formel

(10)

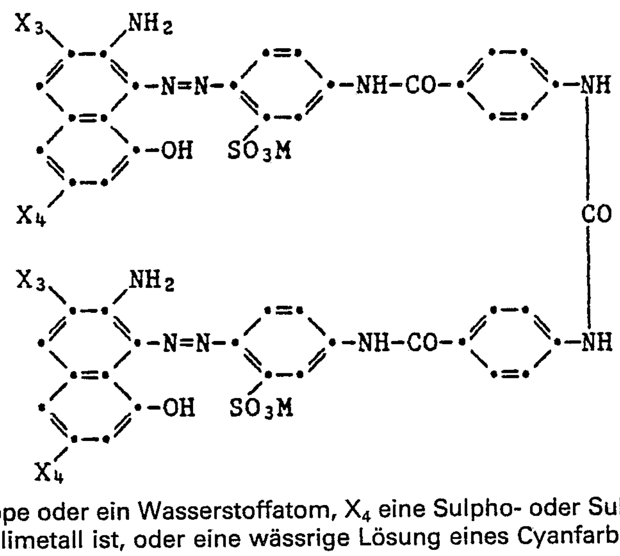

worin $X_3$ eine Sulphogruppe oder ein Wasserstoffatom, $X_4$ eine Sulpho- oder Sulphonamidgruppe und M Wasserstoff oder ein Alkalimetall ist, oder eine wässrige Lösung eines Cyanfarbstoffes der Formel

(13)

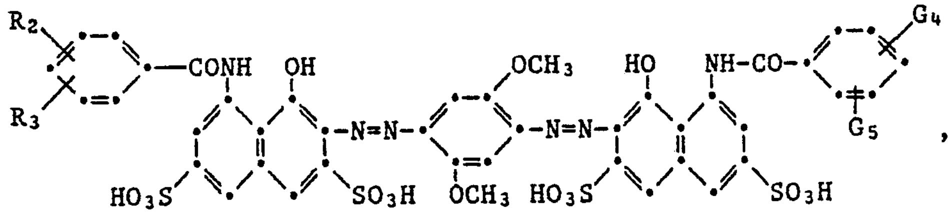

,

worin $R_2$ Halogen, Nitro, Cyano, Trifluoromethyl, Niederalkyl oder Niederalkoxy oder ein Rest der Formel —$NHCOX_3$, —$NHSO_2Y_3$, $SO_2Z_3$ oder —$COW_3$, worin $X_3$ HOOC-Alkyl, HOOC-Alkenyl, HOOC-Phenyl oder Furyl, Thienyl oder Pyridyl, $Y_3$ Niederalkyl oder Phenyl oder Alkylphenyl, $Z_3$ Hydroxyl, Niederalkyl, Phenyl, substituiertes oder unsubstituiertes Amino und $W_3$ Niederalkyl oder Niederalkoxy, Hydroxyl, Phenyl oder substituiertes Amino ist, $R_3$ Wasserstoff oder Chlor oder Nitro, wobei $R_2$ und $R_3$ in Bezug auf die —CO-Gruppe in 3-, 4- oder 5-Stellung stehen, $G_4$ Wasserstoff oder Chlor und $G_5$ Wasserstoff oder Chlor oder eine $H_2NSO_2$-Gruppe ist, oder eine Mischung der wässrigen Lösungen von mindestens zwei der Farbstoffe der Formeln (4), (10) und (13) enthält.

2. Tintenzusammensetzung nach Anspruch 1 dadurch gekennzeichnet, dass der gelbe Azofarbstoff der Formel

(5)

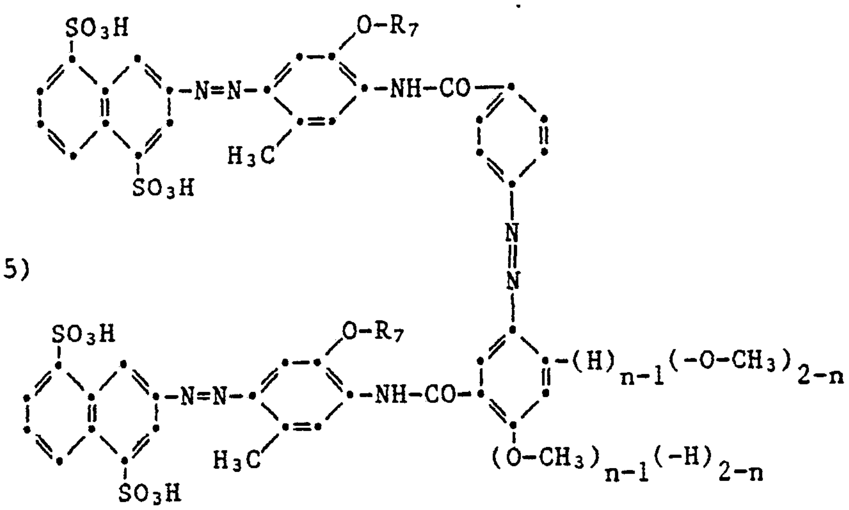

entspricht, worin $R_7$ Methyl oder 2-Hydroxyäthyl und n 1 oder 2 ist.

3. Tintenzusammensetzung nach Anspruch 1, dadurch gekennzeichnet, dass der Cyanazofarbstoff der Formel

(14)

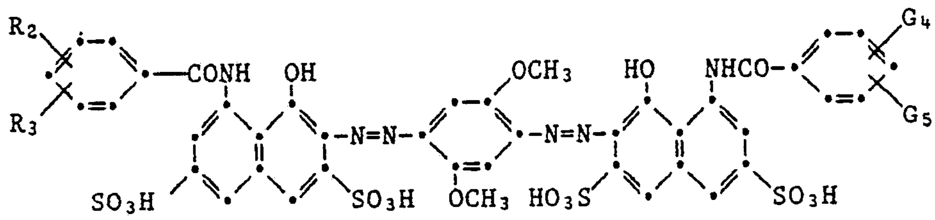

entspricht, worin $G_4$ und $G_5$ die in Anspruch 1 angegebenen Bedeutungen haben und $R_2$ Nitro, Cyan oder $CH_3SO_2$— und $R_3$ Wasserstoff oder Chlor ist.

4. Verfahren zur Herstellung farbiger oder schwarzweisser Bilder nach dem Tintenstrahldruckverfahren, welche auf einem Aufzeichnungsträger in Form eines Punkterasters vorliegen, dessen Punkte eine Vielzahl von Farben ergeben, dadurch gekennzeichnet, dass eine Tintenzusammensetzung nach einem der Ansprüche 1 bis 3 verwendet wird.

5. Die nach dem Verfahren nach Anspruch 4 erhältlichen Bilder.

6. Tintenstrahlfarbdrucker, der ein Informationseingabesystem zur Uebernahme von Information von einem originalen Bildelement in Form digitaler Signale, Systeme zum Speichern dieser Signale und Bildverarbeitungssysteme sowie eine Gruppe von Tintenstrahlaufzeichnungsköpfen zum Aufsprühen von gelben Tintentropfen, eine Gruppe von Tintenstrahlaufzeichnungsköpfen zum Aufsprühen von purpurfarbenen Tintentropfen und eine Gruppe von Tintenstrahlaufzeichnungsköpfen zum Aufsprühen von blaugrünen Tintentropfen enthält, dadurch gekennzeichnet, dass die Tinte die Tintenzusammensetzungen nach einem der Ansprüche 1 bis 3 enthält.

**Revendications**

1. Composition d'encre pour un procédé d'impression par jet d'encre, laquelle composition comprend une solution aqueuse d'un colorant azoïque jaune de formule:

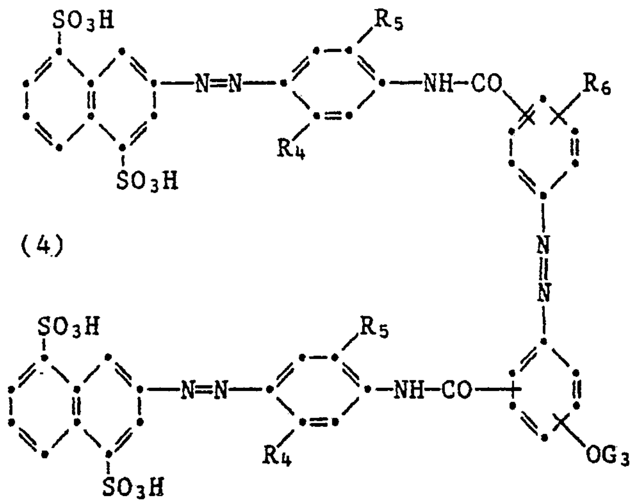

(4)

dans laquelle $R_4$ est un atome de chlore ou un groupe méthyle, méthoxy ou acétylamino, $R_5$ est un atome d'hydrogène ou un groupe méthyle, méthoxy, éthoxy ou 2-hydroxyéthoxy, $R_6$ est un atome d'hydrogène ou un groupe méthoxy et $G_3$ est un groupe méthyle, les restes de formules:

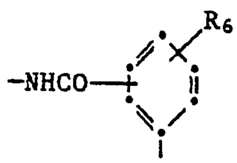

et

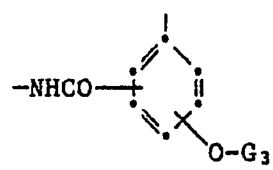

étant différents l'un de l'autre et les groupes —NHCO— étant dans chaque cas liés par leur reste —CO— en position 3 ou 4 et le reste $G_3$—O étant lié au reste benzène en position 2 ou 4 par rapport au pont azo; une solution aqueuse d'un colorant azoïque magenta de formule:

(10)

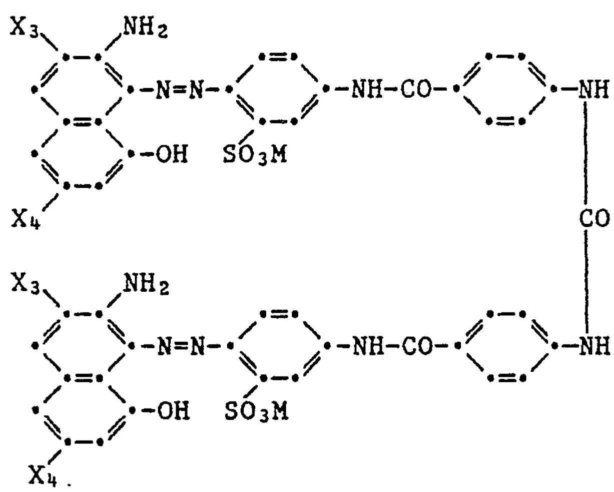

dans laquelle $X_3$ représente un groupe acide sulfonique ou un atome d'hydrogène, $X_4$ représente un groupe acide sulfonique ou un groupe amide d'acide sulfonique, et M est un atome d'hydrogène ou d'un métal alcalin; ou une solution aqueuse d'un colorant cyan de formule:

(13)

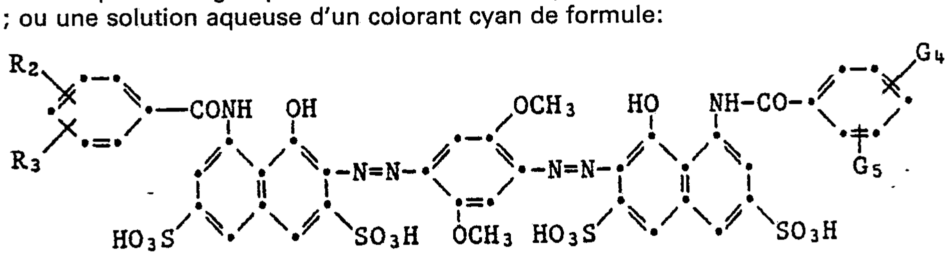

dans laquelle $R_2$ est un atome d'halogène ou un groupe nitro, cyano, trifluorométhyle, alkyle ou alcoxy inférieur ou un radical de formule —$NHCOX_3$,—$NHSO_2Y_3$,—$SO_2Z_3$ ou —$COW_3$, où $X_3$ est un groupe HOOC-alkyle, HOOC-alcényle, HOOC-phényle ou furyle, thiényle ou pyridyle, $Y_3$ est un groupe alkyle inférieur, phényle ou alkylphényle, $Z_3$ est un groupe hydroxyle, alkyle inférieur, phényle ou amino substitué ou non substitué, et $W_3$ est un groupe alkyle ou alcoxy inférieur, hydroxyle, phényle ou amino substitué, $R_3$ est un atome d'hydrogène ou de chlore ou un groupe nitro, $R_2$ et $R_3$ étant dans les positions 3, 4 ou 5 par rapport au groupe —CO, $G_4$ est un atome d'hydrogène ou de chlore et $G_5$ est un atome d'hydrogène ou de chlore ou un groupe $H_2NSO_2$—, ou une combinaison des solutions aqueuses d'au moins deux colorants de formules 4, 10 et 13.

2. Composition selon la revendication 1, dans laquelle les colorants azoïques jaunes sont de formule:

(5)

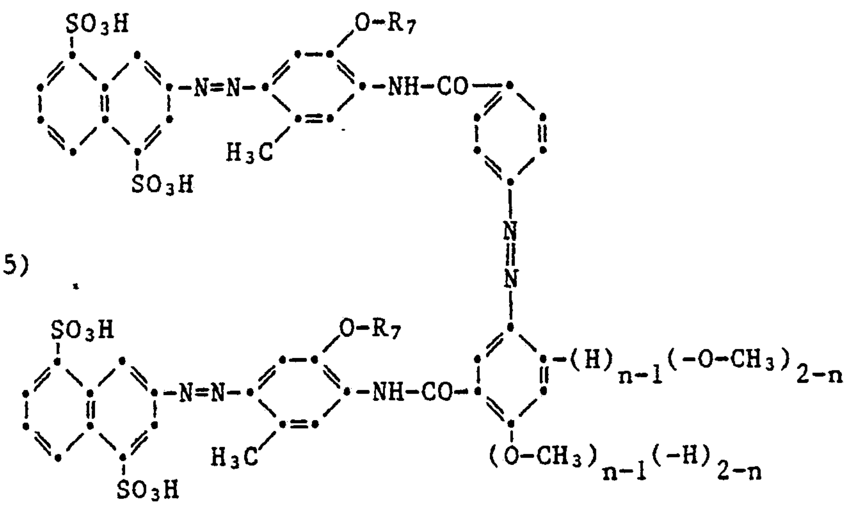

dans laquelle $R_7$ est un groupe méthyle ou 2-hydroxyéthyle et *n* vaut 1 ou 2.

3. Composition selon la revendication 1, dans laquelle les colorants azoïques cyan sont de formule:

(14)

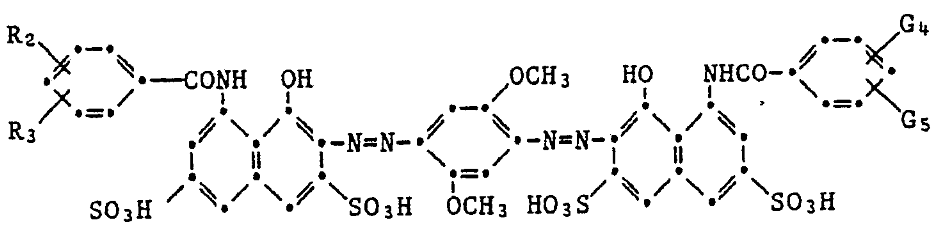

dans laquelle $G_4$ et $G_5$ ont les mêmes significations que dans la revendication 1 et $R_2$ est un groupe nitro, cyano ou $CH_3SO_2$—, et $R_3$ est un atome d'hydrogène ou de chlore.

4. Procédé de production d'images en couleurs ou en noir et blanc par le procédé d'impression par jet d'encre sous forme de motifs de points avec des points d'encre de plusieurs couleurs sur un substrat d'enregistrement, qui comprend l'emploi d'une combinaison des solutions aqueuses de colorants conformes à l'une quelconque des revendications 1 à 3, en qualité de compositions d'encres.

5. Images qu'on peut obtenir par le procédé selon la revendication 4.

6. Appareil d'impression en couleurs par jet d'encre, qui comprend des moyens d'entrée d'informations d'images pour la réception d'une information d'images d'un élément de l'image initiale sous forme de signaux numériques, avec des moyens de mémoire pour la mise en mémoire desdits signaux et des moyens de traitement d'images, et un groupe de têtes à jet d'encre pour l'éjection de gouttes d'une encre jaune, un groupe de têtes à jet d'encre pour l'éjection de gouttes d'une encre magenta et un groupe de têtes à jet d'encre pour l'éjection de gouttes d'une encre cyan, appareil dans lequel l'encre comprend les compositions d'encre selon l'une quelconque des revendications 1 à 3.